# DEMANDE DE BREVET EUROPEEN

(11) **EP 2 317 196 A1**
(43) Date de publication de la demande: **04.05.2011**
(21) Numéro de dépôt: 10189293.3
(22) Date de dépôt: 28.10.2010
(51) Int. Cl.: F16L 3/10

(54) **Dispositif pour fixer au moins un tube sur une paroi**

(30) Priorité: 30.10.2009 FR 0957683
(71) Demandeur: CollClip, 35800 Dinard (FR)
(72) Inventeur: Luze, Alain, 35800 Dinard (FR)
(74) Mandataire: Maillet, Alain

(57) **Abrégé**

La présente invention se rapporte à un dispositif de fixation (100, 100') d'au moins un tube (T) sur une paroi (M), comprenant une embase (200, 200') destinée à réceptionner ledit tube et prévue pour être fixée sur ladite paroi, une coiffe (300, 300') destinée à être retenue sur l'embase (200, 200'), ladite embase étant délimitée par une paroi de fond (240) destinée à être appliquée sur ladite paroi (M), le dispositif comprenant des moyens prévus pour brider, entre l'embase et la coiffe, une gamme de plusieurs diamètres de tubes, lorsque la coiffe (300, 300') est retenue sur l'embase (200, 200').

Selon l'invention, ces moyens comprennent au moins une paire de pattes élastiques (250) disposées en vis-à-vis et tournées dans une direction parallèle au sens de montage de la coiffe (300, 300') sur l'embase (200, 200'), et en ce que lesdites deux pattes élastiques (250a et 250b) font saillie de l'embase (200, 200'), de l'autre côté de sa paroi de fond (240), les pattes élastiques (250a et 250b) étant destinées à être mises en contact avec la paroi du tube (T).

## Description

La présente invention se rapporte à un dispositif pour fixer au moins un tube, une gaine, contre une paroi.

Il est fort utile de pouvoir fixer, à intervalles réguliers, des tubes, tels que des tubes de chauffage, des canalisations d'eau sanitaire, des gaines électriques etc., contre des parois murales afin qu'ils puissent demeurer parfaitement en place.

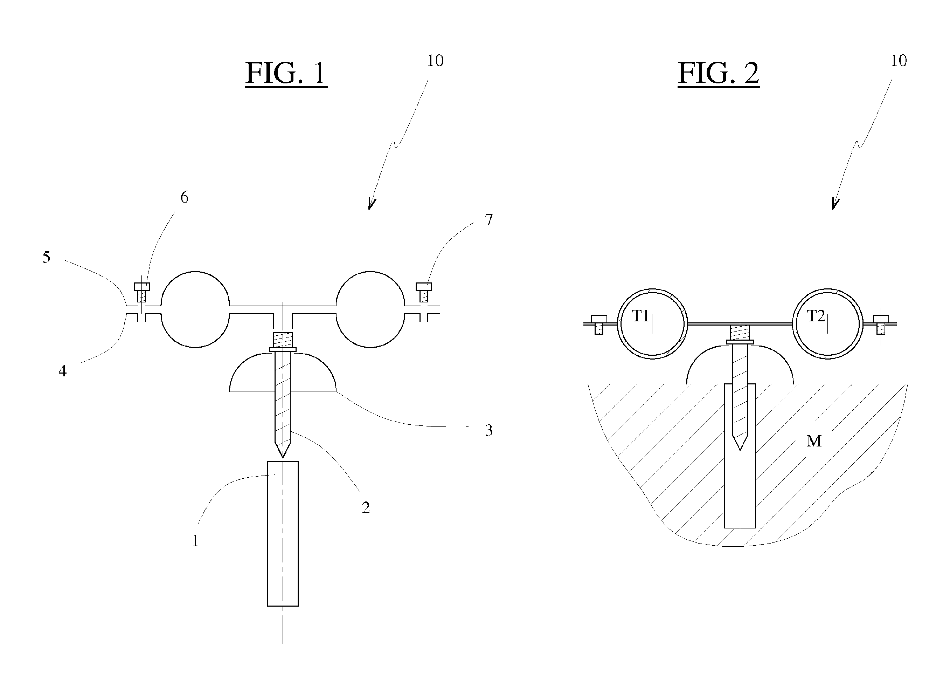

Pour fixer une paire de tubes de chauffage, on peut utiliser un dispositif 10 comme celui qui est présenté sur la Fig. 1. Il se compose de sept pièces :
- une cheville 1,
- une vis support 2 pour la cheville 1,
- une rosace de déport 3,
- une patte inférieure 4,
- une patte supérieure 5,
- deux vis 6 et 7 pour brider mutuellement les deux pattes 4 et 5.

Tous ces composants sont métalliques. Une bande de matière plastique souple peut recouvrir les parties arrondies des pattes pour limiter la transmission de vibrations dans la paroi murale lorsque les tubes encaissent des coups de bélier, consécutifs à la fermeture brutale d'un robinet, d'une vanne.

La mise en oeuvre du dispositif commence par le percement de trous à intervalles réguliers dans le mur, à mi-distance de l'emplacement de pose des tubes. On insère les chevilles dans les trous, puis l'on enfile les vis 2 au travers de rosaces 3 et on les visse dans les chevilles. On fixe alors les pattes inférieures par vissage sur les parties saillantes des vis, et l'on place les tubes sur les parties arrondies. On vient brider les tubes en fixant les pattes supérieures sur les pattes inférieures, par vissage.

Le dispositif 10 fixé contre une paroi murale M est présenté sur la Fig. 2. Il enserre deux tubes T1 et T2.

Le dispositif est décliné dans une variante permettant la fixation d'un seul tube, par exemple d'alimentation en eau froide ou chaude et convient encore pour fixer une gaine électrique ou une canalisation de gaz. Dans cette variante, le dispositif se compose encore de sept pièces.

Ces fixations sont vendues par lot de cent par les grossistes. Il faut une fixation pour un tube d'un diamètre particulier. La gamme standard de tubes comprend huit diamètres exprimés en mm: 8, (10), 12, 14, 16, 18, (20), 22. On notera cependant que les valeurs entre parenthèses sont peu usitées.

On connaît encore à la lecture du brevet FR 2 825 133, un dispositif d'attache et de fixation pour canalisations, constitué d'un ensemble monobloc comprenant un corps formant embase, pourvu d'une cheville, pour réceptionner une canalisation, une languette attenante d'un bord au corps de base, et dont l'extrémité libre est pourvue de crans pouvant s'ajuster et coopérer avec des crans complémentaires formés sur l'autre bord du corps de base.

Le demandeur a cherché une solution pour concevoir un dispositif de fixation d'un ou plusieurs tubes, gaines, qui soit plus rationnelle et économique.

A cet effet, est proposé un dispositif de fixation d'au moins un tube sur une paroi support du dispositif, comprenant une embase destinée à réceptionner ledit tube et prévue pour être fixée sur ladite paroi, une coiffe destinée à être retenue sur l'embase ; selon l'invention, le dispositif comprend des moyens prévus pour brider, entre l'embase et la coiffe, une gamme de plusieurs diamètres de tubes lorsque la coiffe est retenue sur l'embase.

Lorsque le dispositif est conçu pour brider un tube, le dispositif peut enserrer des tubes de diamètres différents.

Lorsque le dispositif est conçu pour brider plusieurs tubes, il peut enserrer en même temps, des tubes de même diamètre ou de diamètres différents.

Selon une caractéristique additionnelle de l'invention, ces moyens comprennent au moins une paire de pattes élastiques disposées en vis-à-vis et tournées dans une direction parallèle au sens de montage de la coiffe sur l'embase.

Les pattes élastiques s'ouvrent plus ou moins suivant le diamètre du tube pris dans le dispositif.

Selon une caractéristique additionnelle de l'invention, ces moyens comprennent au moins un patin élastique disposé dans l'embase, la coiffe.

L'élasticité dudit patin permet au dispositif de serrer des tubes de différents diamètres.

Selon une caractéristique additionnelle de l'invention, la coiffe et/ou l'embase sont pourvues respectivement de parois arrondies tournées en vis-à-vis lorsque la coiffe est montée sur l'embase, et dont le rayon R est le plus grand rayon admissible du tube destiné à être tenu dans le dispositif.

Les parois arrondies sont mises en contact localement sur une génératrice.

Selon une caractéristique additionnelle de l'invention, au moins un godron est formé transversalement sur ladite paroi arrondie.

Ce godron améliore l'adhérence du tube dans le dispositif.

Selon une caractéristique additionnelle de l'invention, l'axe du rayon R est situé dans un plan médian des pattes élastiques.

Ainsi la périphérie du tube est tenue en trois points; deux points sont en contact avec les deux pattes élastiques et un point est en contact avec une paroi arrondie. Le tube peut être fermement tenu sans être déformé.

Selon une caractéristique additionnelle de l'invention, ces moyens comprennent des moyens de retenue permettant de retenir la coiffe sur l'embase suivant plusieurs positions relatives.

La hauteur de bridage des tubes pouvant varier, on peut de la sorte accroître l'intervalle de diamètres susceptibles d'être tenus dans le dispositif. On peut, à titre indicatif, tenir des tubes dans une gamme dont le diamètre est compris entre 12 mm et 22 mm.

Selon une caractéristique additionnelle de l'invention, l'embase comporte des parois latérales pourvues de crantages, la coiffe est constituée d'au moins une paroi de voûte bordée par deux branches élastiques pourvues de dents, les crantages étant aptes à coopérer avec les dents, par pas successifs, pour retenir la coiffe sur l'embase, en différentes positions.

Selon une caractéristique additionnelle de l'invention, une vis de serrage du tube traverse la paroi de voûte. En vissant cette vis, son extrémité libre vient appuyer sur la paroi du tube pour accroître son serrage dans le dispositif.

Selon une caractéristique additionnelle de l'invention, l'embase comprend une paroi frontale, une paroi dorsale qui se prolongent en deçà des parois latérales pour former des rainures de guidage aux deux branches de la coiffe.

Pendant la mise en place de la coiffe, celle-ci est guidée sur l'embase.

Selon une caractéristique additionnelle de l'invention, un orifice de réception d'une vis traverse l'embase en débouchant au travers d'une paroi de fond constitutive de l'embase permettant de fixer l'embase, par vissage dans la paroi support du dispositif.

On applique la paroi de fond sur la paroi destinée à supporter le dispositif telle qu'une paroi murale, et l'on visse la vis directement dans la paroi murale ou dans une cheville préalablement logée dans le mur.

Selon une caractéristique additionnelle de l'invention, le dispositif incorpore une cheville qui fait saillie perpendiculairement de la paroi de fond, l'orifice de réception pénétrant dans ladite cheville permettant à une vis d'expandre par vissage ladite cheville.

Le dispositif peut être livré avec une vis pour être complet, prêt à poser.

Selon une caractéristique additionnelle de l'invention, un cache recouvre le dispositif pour le masquer.

A l'issue de sa pose, le dispositif est dissimulé sous le cache.

Selon une caractéristique additionnelle de l'invention, des encoches sont respectivement réalisées dans les branches pour les ouvrir légèrement afin de désengager les dents pour démonter la coiffe.

Selon une caractéristique additionnelle de l'invention, l'embase comprend une paroi arrondie, une paire de pattes élastiques disposées de part et d'autre d'un plan médian de la paroi arrondie, un orifice de réception d'une vis traversant l'embase entre les deux pattes élastiques, la coiffe comprenant une paroi arrondie correspondante.

Ce dispositif permet de fixer un tube.

Selon une caractéristique additionnelle de l'invention, l'embase comprend deux parois arrondies, une paire de pattes élastiques disposées de part et d'autre d'un plan médian de chaque paroi arrondie, un orifice de réception d'une vis traversant l'embase entre les deux parois arrondies, la coiffe comprenant deux parois arrondies correspondantes de même entraxe que celui des parois arrondies de ladite embase.

Ce dispositif permet de fixer deux tubes.

Selon une caractéristique additionnelle de l'invention, un logement de réception d'une vis traverse une paroi de liaison réunissant deux parois de voûte de manière à ce qu'elle puisse prendre ancrage dans un taraudage prévu dans l'embase.

Un serrage progressif des tubes est obtenu en serrant la vis à l'aide d'un outil.

Selon une caractéristique additionnelle de l'invention, le dispositif inclut une cale de rehausse apte à augmenter le déport du tube de la paroi.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une vue de face d'un dispositif de fixation d'une paire de tubes, connu de l'état de la technique,
la Fig. 2 représente une vue de face d'un dispositif de fixation d'une paire de tubes, fixé sur une paroi murale et connu de l'état de la technique,
la Fig. 3 représente une vue en perspective d'un dispositif de fixation d'un tube selon l'invention,
la Fig. 4 représente une vue de face en coupe d'un dispositif de fixation d'un tube selon l'invention,
la Fig. 5 représente une vue de face en coupe d'un dispositif de fixation d'un tube selon l'invention,
la Fig. 6 représente une vue de face en coupe d'un dispositif de fixation d'un tube pourvu d'un moyen additionnel de serrage du tube selon l'invention,
la Fig. 7 représente une vue de face en coupe d'un dispositif de fixation enserrant un tube de relativement grand diamètre et fixé sur une paroi murale selon l'invention,
la Fig. 8 représente une vue de face en coupe d'un dispositif de fixation enserrant un tube de relativement petit diamètre et fixé sur une paroi murale selon l'invention,
la Fig. 9 représente une vue de face d'une première variante de réalisation d'un dispositif de fixation d'un tube, incorporant une cheville selon l'invention,
la Fig. 10 représente une vue de face d'une seconde variante de réalisation d'un dispositif de fixation pour deux tubes selon l'invention,
la Fig. 11 représente une vue de face d'une seconde variante de réalisation d'un dispositif de fixation dans laquelle deux tubes d'un même diamètre sont retenus selon l'invention,
la Fig. 12 représente une vue de face d'une seconde variante de réalisation d'un dispositif de fixation dans laquelle deux tubes de diamètres différents sont retenus selon l'invention,
la Fig. 13 représente une vue de face d'une seconde variante de réalisation d'un dispositif recouvert par un cache selon l'invention,
la Fig. 14 représente une vue de face d'une troisième variante de réalisation d'un dispositif de fixation pour deux tubes selon l'invention et,
la Fig. 15 représente une vue en coupe d'une cale de rehausse pour un dispositif de fixation de tube selon l'invention.

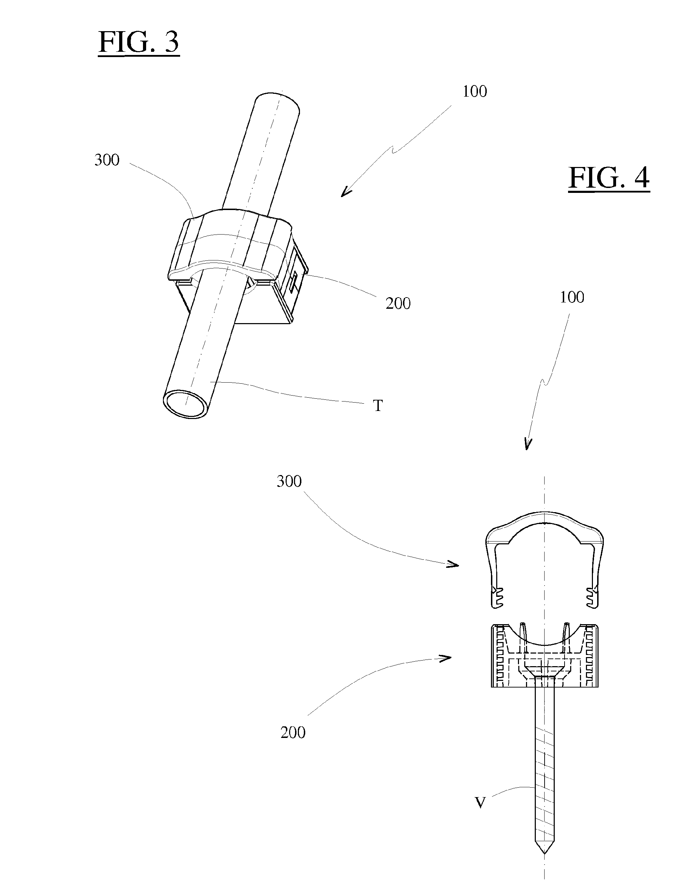

Le dispositif 100 présenté sur la Fig. 3 est destiné à fixer un tube, une canalisation, une gaine électrique et de manière générale toute conduite circulaire transportant un fluide, des fils électriques, des fibres optiques etc., ou encore une barre pleine, sur une paroi, et en particulier une paroi murale. Dans la suite de cette description, et pour en simplifier la lecture, ces conduites circulaires ou quasi circulaires sont appelées tubes et portent la référence T.

Le dispositif se compose sur les Figs. 3 et 4, d'une embase 200, d'une coiffe 300 et éventuellement d'une vis à expansion V du commerce. Il permet de fixer un tube sur une paroi murale. L'embase 200 et la coiffe 300 sont prévues pour coopérer ensemble afin de serrer entre elles un tube. On remarquera que l'embase et la coiffe sont deux composants distincts.

L'embase 200 est destinée à être fixée sur une paroi murale ou tout support adéquat pour soutenir le tube avant sa fixation définitive par le dispositif.

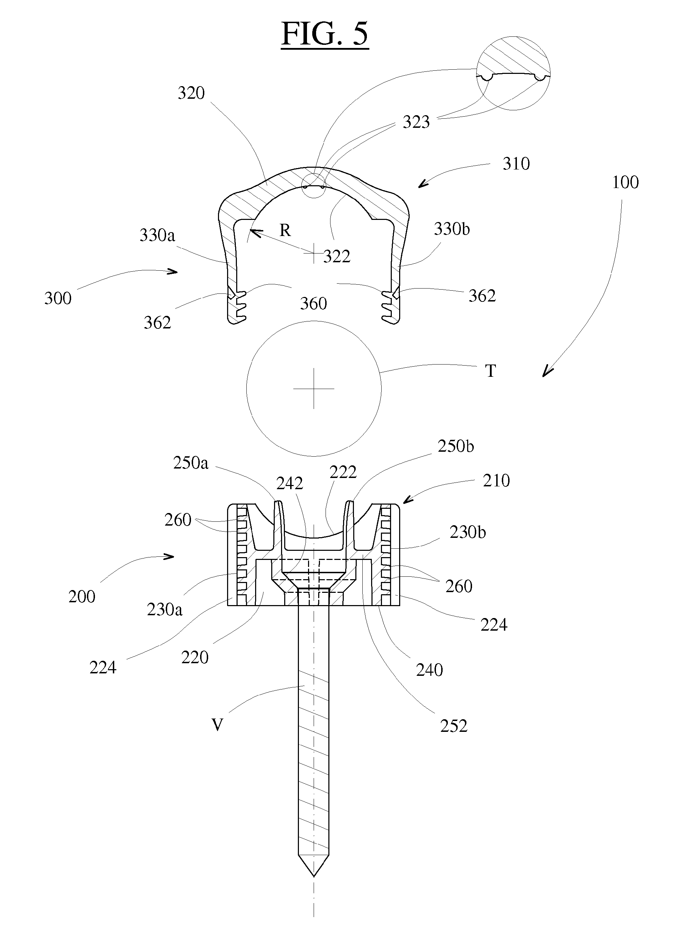

Elle est constituée, sur la Fig. 5, d'un corps 210 délimité par une paroi frontale, une paroi dorsale 220, raccordées à deux parois latérales 230a, 230b et une paroi de fond 240 destinée à être appliquée sur la paroi murale. Seule une paroi dorsale est visible sur cette vue de face en coupe. Un orifice 242 de réception de la vis V traverse l'embase 200 en débouchant au travers de la paroi de fond 240 permettant de fixer l'embase, par vissage dans ladite paroi murale, en particulier dans une cheville préalablement logée dans un trou réalisé dans cette paroi murale. La paroi de fond 240 est évidée et nervurée à la périphérie du débouché de l'orifice afin que l'embase présente à la fois une structure rigide et légère, économe en matière.

Deux pattes élastiques 250a et 250b font saillie dans la partie haute de l'embase, c'est-à-dire de l'autre côté de la paroi de fond. Elles sont destinées à être mises en contact avec la paroi externe du tube. Elles prennent naissance sur une paroi intermédiaire 252 reliant à mi-hauteur de l'embase, les deux parois latérales 230, et en bordant le débouché de l'orifice 242.

Dans cette partie haute de l'embase, on remarquera que la paroi frontale et la paroi dorsale 220 sont délimitées respectivement par deux parois arrondies 222 destinées, le cas échéant, à former une butée au tube. Elles sont disposées en vis-à-vis, en étant centrées entre les deux pattes élastiques 250. Elles sont également tournées dans une direction opposée à la paroi de fond 240, c'est-à-dire vers le haut sur cette Fig. 5. Ces parois arrondies 222 débouchent au-dessus de la paroi intermédiaire 252, si bien que les deux pattes élastiques 250a et 250b peuvent s'expandre, s'escamoter dans le volume d'une cavité délimitée entre ces parois arrondies 222 et la paroi intermédiaire 252. Elles peuvent alors se déformer dans ce volume en direction des deux parois latérales 230. Leur déformation est limitée par la présence des parois arrondies 222, pour qu'elles ne puissent pas être détériorées par un rapprochement excessif de la coiffe 300 sur l'embase 200.

Dans une variante de réalisation non représentée, les pattes élastiques sont orientées dans une direction parallèle à la face dorsale. Deux pattes élastiques sont prévues sur l'embase et deux pattes élastiques sont prévues sur la coiffe.

Des crantages 260 de retenue de la coiffe 300 sont formés dans les parois latérales. Les parois frontale et dorsale 220 sont par ailleurs prolongées latéralement de manière à déborder les parois latérales 230 pour former des rainures de guidage 224 de la coiffe 300.

La coiffe 300 est destinée à coopérer avec l'embase 200 pour enserrer le tube T afin qu'il puisse être bridé dans celui-ci et finalement être fixé sur la paroi murale.

Elle se compose d'un corps 310 comprenant une paroi de voûte 320 prolongée par deux branches latérales 330a, 330b.

On aborde maintenant un aspect intéressant de l'invention et qui se rapporte à la faculté, pour le dispositif objet de l'invention, de pouvoir brider plusieurs diamètres de tubes.

Par exemple, dans le domaine sanitaire, les diamètres répertoriés dans le tableau suivant permettent de répondre à 90 % des besoins.

| | | | | | | |
|---|---|---|---|---|---|---|
| Ø extérieur en mm | 12 | 14 | 16 | 18 | 20 | 22 |

Les diamètres 14 et 16 mm représentent à eux seuls 70 % des utilisations.

Le diamètre 20 mm est d'une utilisation rarissime.

Le dispositif 100 permet de tenir un tube dont le diamètre est choisi parmi ceux du tableau ci-dessus, ou dont le diamètre est compris entre 12 et 22 mm.

La présence des pattes élastiques 250, d'une part, permet d'atteindre ce résultat, en se déformant plus ou moins sous l'effet de leur mise en contact avec le tube.

D'autre part, des dents 360 sont formées respectivement dans les parties terminales des branches 330 pour coopérer avec les crantages 260, formant ensemble des moyens de retenue de la coiffe sur l'embase afin de retenir suivant plusieurs positions relatives la coiffe 300 sur ladite embase pour accroître encore la capacité du dispositif à brider une gamme de tube d'amplitude de diamètres étendue.

Les branches 330 sont élastiques, si bien que les dents 360 peuvent être écartées pour qu'elles puissent s'encliqueter sur les crantages 260. Les profils des crantages et/ou des dents favorisent leur chevauchement lors du rapprochement de la coiffe sur l'embase et interdisent leur éloignement. Les dents 360 sont formées sur les faces internes des branches 330, sur cette Fig. 5.

Des encoches 362 sont respectivement réalisées dans les branches 330 pour les ouvrir légèrement afin de désengager les dents pour démonter la coiffe.

La paroi de voûte 320 est bordée intérieurement par une paroi arrondie 322 dont le rayon R est le plus grand rayon admissible du tube T destiné à être tenu dans le dispositif. Dans la pratique, ce rayon R est légèrement plus grand pour que, d'une part, le contact du tube puisse se faire sur une génératrice et, d'autre part, tenir compte des tolérances de fabrication du tube. La paroi arrondie 322 est tournée en direction des pattes élastiques 250 lorsque la coiffe 300 est montée sur l'embase 200.

Au moins un godron 323 est formé transversalement sur la paroi arrondie 332 pour améliorer l'accrochage de la coiffe 300 sur le tube T, en limitant la surface de la zone de contact avec le tube. De manière avantageuse, deux godrons sont formés de sorte que le tube puisse être pris entre quatre génératrices, deux génératrices appartenant aux deux pattes élastiques 250, et les deux génératrices des deux godrons 323. Les deux godrons sont formés de manière symétrique par rapport au plan médian de la coiffe. Leur efficacité est accrue lorsque le tube retenu est du type multicouche, puisqu'ils peuvent mordre légèrement l'enveloppe externe du tube.

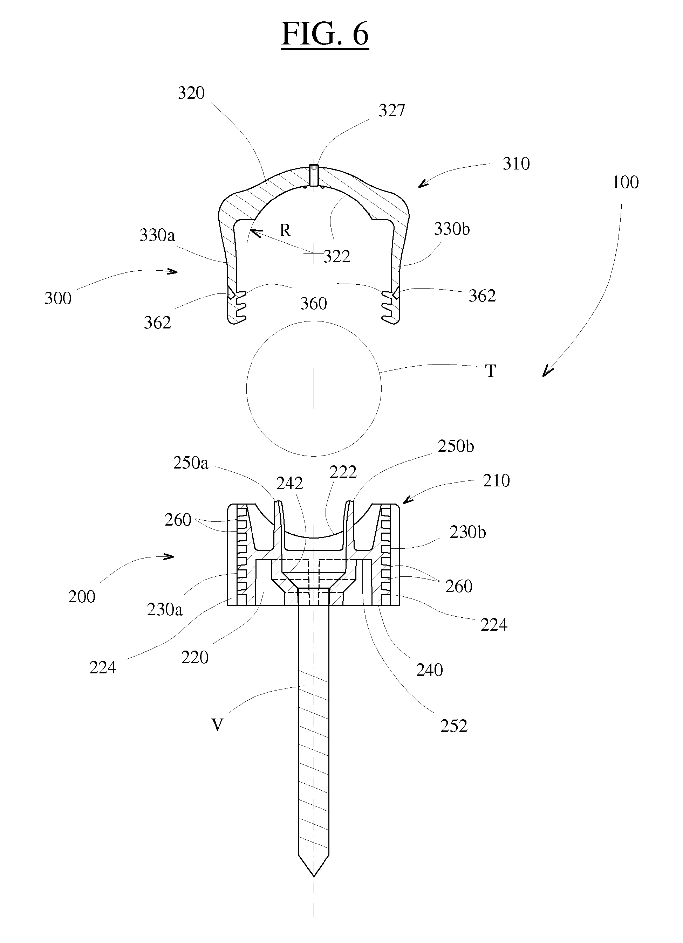

Sur la Fig. 6, le dispositif 100' est pourvu d'un moyen complémentaire 327 pour accroître la modularité d'usage du dispositif dans le sens où il peut brider efficacement des tubes dont le diamètre extérieur est coté, non pas en millimètres, mais en pouce. Cette faculté peut s'avérer utile, si le pas des crantages 260 et des dents 360 est défini avec les unités du système métrique, comme par exemple le millimètre.

Ce moyen complémentaire est constitué d'une vis 327 qui traverse la paroi de voûte 320, et de préférence en son sommet. Cette vis est avantageusement de type HC pour améliorer son intégration dans la coiffe 300. Elle est également du type à bout plat pour accroître le serrage du tube en appuyant sur lui par une génératrice. Ainsi, on peut, en vissant cette vis, accroître le serrage du tube dans le dispositif.

Ces deux composants sont avantageusement fabriqués par injection d'une matière plastique dans un moule de fabrication. Cette fabrication en matière plastique réduit la transmission de bruits dans la paroi murale, susceptibles d'être transmis par le tube (coups de bélier en particulier).

La mise en oeuvre du dispositif de fixation se présente de la manière suivante. Il convient, par exemple, pour fixer une canalisation d'eau sanitaire, une canalisation de gaz, une gaine électrique sur une paroi murale.

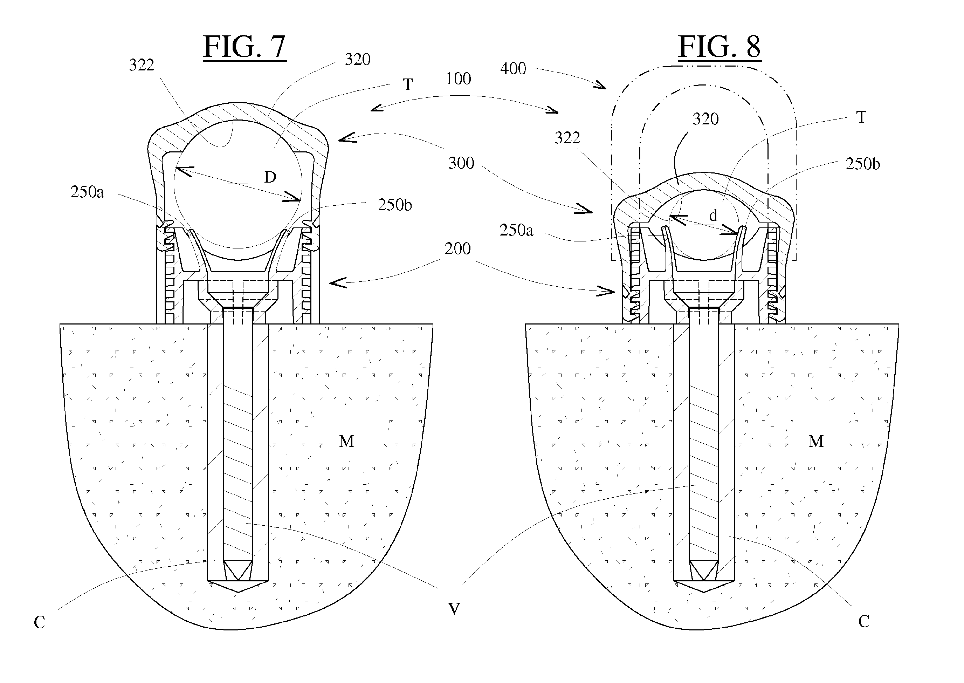

On fixe, à intervalles réguliers, les embases 200 dans la paroi murale au niveau de la trajectoire du tube, en utilisant des chevilles murales et des vis V que l'on visse dans les orifices 242. On place le tube sur les pattes élastiques 250, puis l'on vient monter une coiffe 300 sur chaque embase 200. Les branches 330 de la coiffe 300 coulissent dans les rainures 224 et les dents 360 franchissent successivement les crantages 260 jusqu'à ce que la paroi arrondie 322 de la coiffe entre en contact avec le tube et le repousse contre les pattes élastiques 250 qui fléchissent et s'écartent alors. Le positionnement du tube est encore possible à ce stade par coulissement pour affiner son positionnement. Un simple coup de poing ou l'usage d'un maillet permet, en frappant la paroi de voûte 320, que les dents franchissent les crantages d'un pas supplémentaire pour confirmer le serrage du tube entre la paroi arrondie 322 et les pattes élastiques 250. Sur les Figs. 7 et 8, les chevilles portent la référence C et la paroi murale, la référence M.

Sur la Fig. 7, un tube T de relativement grand diamètre D est retenu entre l'embase 200 et la coiffe 300.

Sur la Fig. 8, un tube T de relativement petit diamètre d est retenu entre l'embase 200 et la coiffe 300.

On remarquera que le tube B est tenu idéalement entre trois points, par la paroi arrondie 322 et par les deux pattes élastiques 250 si bien qu'il peut être fermement tenu sans être écrasé. Toutefois, dans une situation montrée sur la Fig. 8, le tube peut encore être mis en contact avec les parois arrondies 222 de l'embase 200 et dont le rayon est le plus grand rayon admissible du tube B destiné à être tenu dans le dispositif.

Un patin de frottement élastique, non représenté, peut être disposé entre les deux pattes élastiques pour accroître l'adhérence du tube dans le dispositif. En variante de réalisation, ce patin peut être enchâssé dans un logement prévu dans la paroi arrondie 322 de la coiffe 300. Il peut encore être utilisé comme moyen élastique pour brider le tube, conjointement ou en remplacement des pattes élastiques, à l'issue du rapprochement de la coiffe 300 sur l'embase 200. Dans ce cas, son épaisseur, son élasticité, sont définies pour accepter le serrage de tube de diamètres différents.

En aménageant la coiffe et l'embase de manière à ce que les pattes élastiques soient disposées sur la coiffe et non sur l'embase, le tube repose alors sur les parois arrondies de l'embase. On obtient ainsi un dispositif dont le fonctionnement est comparable au dispositif décrit ci-avant.

Par ailleurs, un cache 400, représenté en traits interrompus sur la Fig. 8, peut être utilisé pour recouvrir le dispositif 100 afin de le masquer. Il est constitué d'une pièce en arche creuse intérieurement pouvant recouvrir les parois latérale, frontale et dorsale de l'embase et de la coiffe. Son apparence, de préférence de couleur, favorise l'intégration du dispositif dans une habitation.

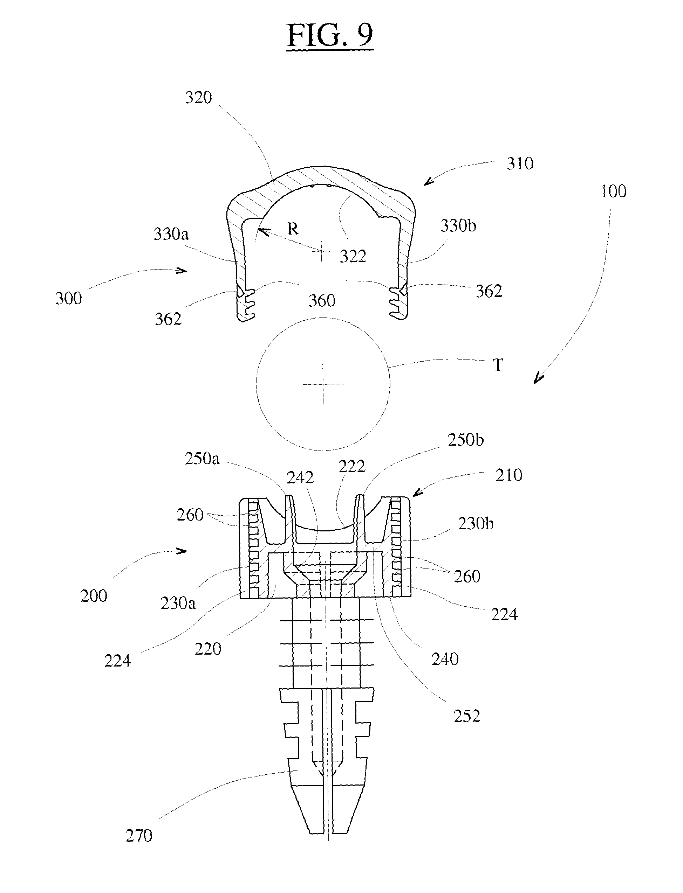

Dans une première variante de réalisation présentée sur la Fig. 9, le dispositif de fixation 100 incorpore une cheville 270 qui fait saillie perpendiculairement de la paroi de fond 240. L'orifice de réception 242 pénètre dans la cheville permettant à une vis son expansion par vissage. La cheville est de préférence du type sécable permettant son remplacement par une cheville adaptée à un usage particulier, telle qu'une cheville de type « Molly » convenant aux briques ou autres matériaux à parois minces.

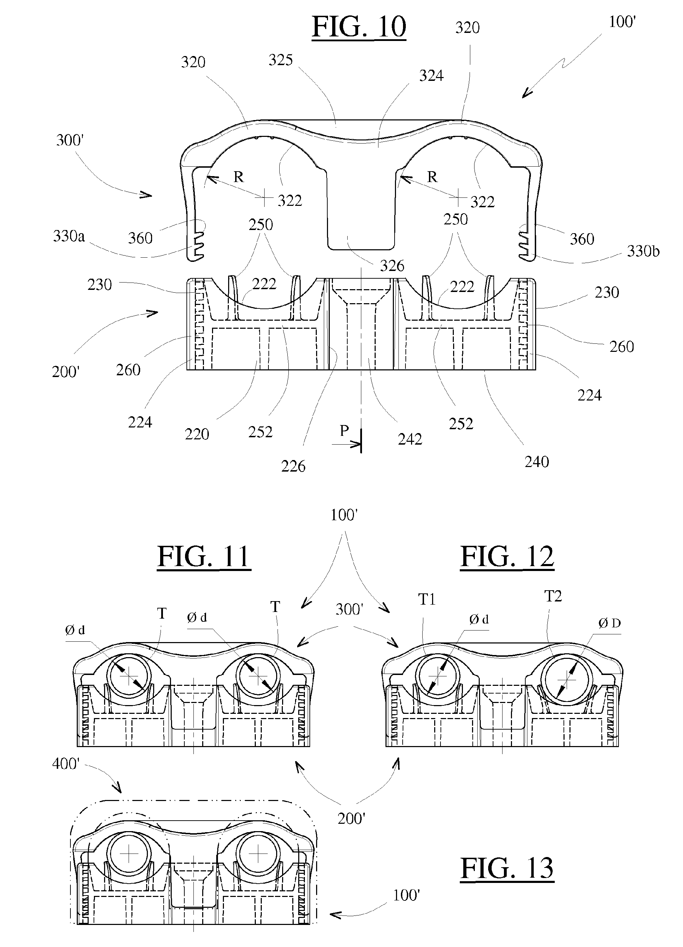

Dans une seconde variante de réalisation présentée sur la Fig. 10, le dispositif 100' de l'invention permet la fixation de deux tubes juxtaposés. Ce dispositif convient, en particulier, pour fixer les tubes d'amenée et de retour de chauffage à eau chauffée raccordant une nourrice et des radiateurs.

Le dispositif 100' se compose, là encore, d'une embase 200' et d'une coiffe 300' élargies pour enserrer deux tubes.

L'embase 200' comporte ainsi deux paires de pattes élastiques 250 disposées de part et d'autre d'un plan P de symétrie transversal de ladite embase. Les deux parois arrondies 222 sont disposées en vis-à-vis, en étant centrées entre deux pattes élastiques 250 d'une même paire. Le rayon de chaque paroi arrondie 222 est le plus grand rayon admissible du tube destiné à être tenu dans le dispositif.

Un orifice 242 de réception de la vis V traverse l'embase 200' pour permettre sa fixation sur une paroi. Il est situé dans cette variante dans le plan P de symétrie transversal de l'embase. Des crantages 260 de retenue de la coiffe 300' sont formés dans les parois latérales 230. Les parois frontale et dorsale 220 sont par ailleurs prolongées latéralement de manière à déborder les parois latérales 230 pour former des rainures de guidage 224 de la coiffe 300' lors de sa mise en place.

On note encore la présence de deux renfoncements 226 de guidage complémentaire de la coiffe creusant respectivement la paroi frontale et la paroi dorsale 220.

La coiffe 300' se compose de deux parois de voûte 320 réunies par une paroi de liaison 324 et qui sont prolongées par deux branches 330a, 330b, pourvues respectivement de dents 360. Cette paroi de liaison est incurvée pour faciliter la fabrication de la coiffe. Au moins une nervure 325 surplombe cette paroi de liaison 324 pour renforcer la rigidité de la coiffe 300' et limiter sa déformation à l'usage.

Chaque paroi de voûte 320 est bordée intérieurement par une paroi arrondie 322 dont le rayon R est le plus grand rayon admissible du tube B destiné à être tenu dans le dispositif. Deux languettes 326 prolongent de part et d'autre la paroi de liaison 324 afin de pouvoir glisser dans les renfoncements 226 pour guider verticalement la coiffe 300' lorsqu'on la déplace pour brider les tubes. Par ailleurs ces languettes masquent l'interstice central existant entre l'embase et la coiffe, lorsque des tubes de grand diamètre sont serrés dans le dispositif.

Sur la Fig. 11, deux tubes B d'un même diamètre d sont retenus dans le dispositif 100'.

Compte tenu de l'élasticité des pattes 250, le dispositif 100' de l'invention convient également, comme cela est montré sur la Fig. 12, pour fixer deux tubes T1 et T2 de diamètres différents, d et D. Cette possibilité est intéressante lorsque, pour des raisons de coût des tubes ou lorsque le calcul de l'installation impose des sections particulières, deux tubes de diamètres différents doivent être fixés à intervalles réguliers.

Sur la Fig. 13, un cache 400' à double arche peut être utilisé pour recouvrir le dispositif 100' pour le masquer. Il est constitué d'une pièce à doubles arches creuses intérieurement pouvant recouvrir les parois latérale, frontale et dorsale de l'embase et de la coiffe.

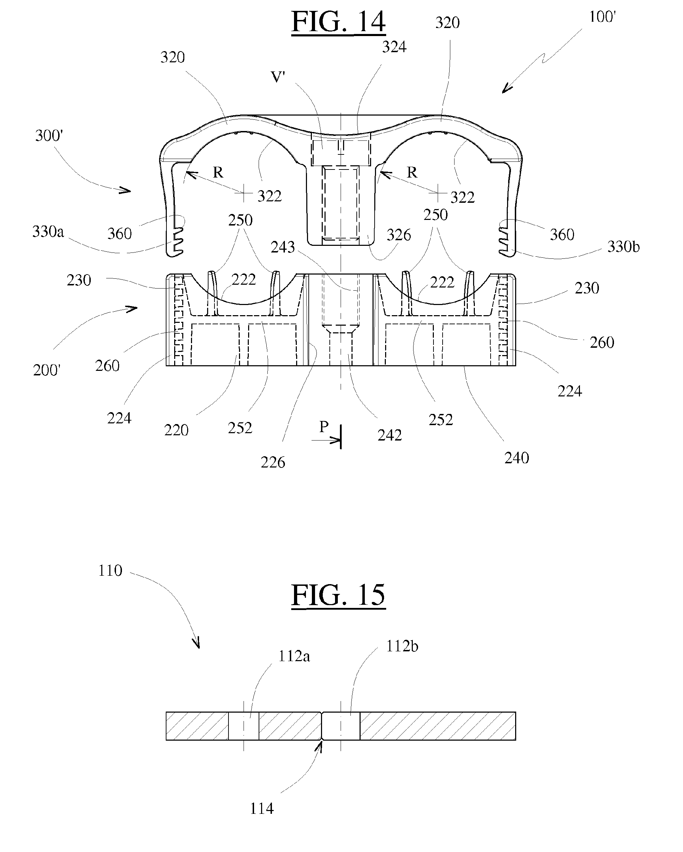

Sur la Fig. 14, une vis V' traverse la paroi de liaison 324, en étant disposée dans un logement adapté, pour venir prendre ancrage dans un taraudage 243 prévu dans l'embase 200'. Cela permet de rapprocher progressivement la coiffe 300' de l'embase 200', par vissage de la vis V', sans qu'il soit nécessaire de frapper la paroi de voûte 320 ou faire l'usage d'un maillet. Le taraudage est avantageusement réalisé dans le débouché de l'orifice de réception 242 tourné vers la coiffe 300'. On pourrait éventuellement concevoir une embase et une coiffe dépourvues de crantages et de dents formant initialement les moyens de retenue.

Sur la Fig. 15 est montrée une cale 110 destinée à être interposée entre un dispositif de type simple tube ou un dispositif de type double tube, et la paroi de réception du dispositif. Son utilisation permet de déporter davantage les tubes de la paroi murale. Elle est constituée d'une plaque rectangulaire d'épaisseur constante traversée par au moins un trou 112. La largeur de la plaque est sensiblement la même que celle du dispositif de type à double tube visible sur la Fig. 14. Ses grandes faces peuvent être ajourées pour économiser la matière nécessaire à sa fabrication. Le trou 112b est traversé par la vis de fixation de l'embase sur la paroi murale. Une ligne de striction 114 est réalisée de manière transversale sur au moins une face principale de la plaque de manière à pouvoir la séparer en deux parties. L'une des parties résiduelles traversée d'un trou 112a, sur la gauche de cette Fig. 15, pouvant être utilisée comme cale de rehausse pour un dispositif de type simple tube, en étant retenue par la vis de fixation de l'embase.

Le dispositif de l'invention permet de fixer au mur ou contre une paroi, des tubes dont le diamètre est choisi dans une gamme relativement étendue. Un seul dispositif peut ainsi remplacer toute une panoplie de dispositifs de fixation mono diamètre connus de l'état de la technique.

Son installation est rapide à mettre en oeuvre puisque l'opération de verrouillage du tube, des tubes peut se faire manuellement.

Son prix de revient est également avantageux. Sa fabrication dans une matière plastique lui confère une bonne isolation phonique.

Il est démontable et réutilisable, cela est utile, par exemple, pour faciliter la pose d'un revêtement mural.

## Revendications

1. Dispositif de fixation (100, 100') d'au moins un tube (T) sur une paroi (M), comprenant une embase (200, 200') destinée à réceptionner ledit tube et prévue pour être fixée sur ladite paroi, une coiffe (300, 300') destinée à être retenue sur l'embase (200, 200'), ladite embase étant délimitée par une paroi de fond (240) destinée à être appliquée sur ladite paroi (M), le dispositif comprenant des moyens prévus pour brider, entre l'embase et la coiffe, une gamme de plusieurs diamètres de tubes, lorsque la coiffe (300, 300') est retenue sur l'embase (200, 200'), **caractérisé en ce que** ces moyens comprennent au moins une paire de pattes élastiques (250) disposées en vis-à-vis et tournées dans une direction parallèle au sens de montage de la coiffe (300, 300') sur l'embase (200, 200'), et **en ce que** lesdites deux pattes élastiques (250a et 250b) font saillie de l'embase (200, 200'), de l'autre côté de sa paroi de fond (240), les pattes élastiques (250a et 250b) étant destinées à être mises en contact avec la paroi du tube (T).

2. Dispositif de fixation (100, 100') selon la revendication 1, **caractérisé en ce que** ces moyens comprennent au moins un patin élastique disposé dans l'embase (200, 200'), la coiffe (300, 300').

3. Dispositif de fixation (100, 100') selon la revendication 1 ou 2, **caractérisé en ce que** la coiffe (300, 300') et/ou l'embase (200, 200') sont pourvues respectivement de parois arrondies (222, 322) tournées en vis-à-vis lorsque la coiffe est montée sur l'embase, et dont le rayon (R) est le plus grand rayon admissible du tube (T) destiné à être tenu dans le dispositif (100, 100').

4. Dispositif de fixation (100, 100') selon la revendication 3, **caractérisé en ce qu'**au moins un godron (323) est formé transversalement sur ladite paroi arrondie (332).

5. Dispositif de fixation (100, 100') selon la revendication 3 ou 4, **caractérisé en ce que** l'axe du rayon (R) est situé dans un plan médian des pattes élastiques (250).

6. Dispositif de fixation (100, 100') selon l'une quelconque des revendications précédentes, **caractérisé en ce que** ces moyens comprennent des moyens de retenue (260, 360) permettant de retenir la coiffe (300, 300') sur l'embase (200, 200') suivant plusieurs positions relatives.

7. Dispositif de fixation (100, 100') selon la revendication 6, **caractérisé en ce que** l'embase (200, 200') comporte des parois latérales (230a, 230b) pourvues de crantages (260), et **en ce que** la coiffe (300, 300') est constituée d'au moins une paroi de voûte (320) bordée par deux branches (330a, 330b) élastiques pourvues de dents (360), les crantages (260) étant aptes à coopérer avec les dents (360), par pas successifs, pour retenir la coiffe (300, 300') sur l'embase (200, 200'), en différentes positions.

8. Dispositif de fixation (100, 100') selon la revendication 7, **caractérisé en ce qu'**une vis de serrage (327) du tube (T) traverse la paroi de voûte (320).

9. Dispositif de fixation (100, 100') selon la revendication 7 ou 8, **caractérisé en ce que** l'embase (200, 200') comprend une paroi frontale, une paroi dorsale (220) qui se prolongent en deçà des parois latérales (230a, 230b) pour former des rainures de guidage (224) aux deux branches (330a, 330b) de la coiffe (300, 300').

10. Dispositif de fixation (100, 100') selon l'une quelconque des revendications précédentes, **caractérisé en ce qu'**un orifice (242) de réception d'une vis (V) traverse l'embase (200, 200') en débouchant au travers de la paroi de fond (240) permettant de fixer l'embase, par vissage dans ladite paroi (M).

11. Dispositif de fixation (100, 100') selon la revendication 10, **caractérisé en ce qu'**il incorpore une cheville (270) qui fait saillie perpendiculairement de la paroi de fond (240), l'orifice de réception (242) pénétrant dans ladite cheville permettant à une vis (V) d'expandre par vissage ladite cheville.

12. Dispositif de fixation (100, 100') selon l'une quelconque des revendications précédentes, **caractérisé en ce qu'**un cache (400, 400') recouvre le dispositif (100, 100') pour le masquer.

13. Dispositif de fixation (100, 100') selon l'une quelconque des revendications 6 à 10, **caractérisé en ce que** des encoches (362) sont respectivement réalisées dans les branches (330) pour les ouvrir légèrement afin de désengager les dents (360) pour démonter la coiffe (300, 300').

14. Dispositif de fixation (100) selon la revendication 3 à 13, **caractérisé en ce que** l'embase (200) comprend une paroi arrondie (222), une paire de pattes élastiques (250) disposées de part et d'autre d'un plan médian de la paroi arrondie, un orifice (242) de réception d'une vis (V) traversant l'embase entre les deux pattes élastiques (250), la coiffe (300) comprenant une paroi arrondie (322) correspondante.

15. Dispositif de fixation (100') selon la revendication 3 à 13, **caractérisé en ce que** l'embase (200') comprend deux parois arrondies (222), une paire de pattes élastiques (250) disposées de part et d'autre d'un plan médian de chaque paroi arrondie, un orifice (242) de réception d'une vis (V) traversant l'embase entre les deux parois arrondies (222), la coiffe (300') comprenant deux parois arrondies (322) correspondantes de même entraxe que celui des parois arrondies (222) de ladite embase.

16. Dispositif de fixation (100') selon la revendication 15, **caractérisé en ce qu'**un logement de réception d'une vis (V') traverse une paroi de liaison (324) réunissant deux parois de voûte (320) de manière à ce qu'elle puisse prendre ancrage dans un taraudage (243) prévu dans l'embase (200').

17. Dispositif de fixation (100, 100') selon l'une quelconque des revendications précédentes, **caractérisé en ce qu'**il inclut une cale (110) de rehausse apte à augmenter le déport du tube de la paroi (M).
